# EUROPEAN PATENT SPECIFICATION

(11) **EP 1 164 832 B1**
(45) Date of publication and mention of the grant of the patent: **10.11.2004**
(21) Application number: 01904643.2
(22) Date of filing: 09.01.2001
(51) Int. Cl.: A01J 5/013, A01J 5/00

(54) **AN IMPLEMENT FOR DETECTING PHYSICAL ABNORMALITIES IN MILK**
VORRICHTUNG ZUR DETEKTION VON PHYSIKALISCHEN STÖRUNGEN IN MILCH
OUTIL DE DETECTION D'ANOMALIES PHYSIQUES DANS LE LAIT

(30) Priority: 02.02.2000 NL 1014260
(43) Date of publication of application: 02.01.2002
(73) Proprietor: Lely Enterprises AG, 6300 ZUG (CH)
(72) Inventor: VAN DEN BERG, Karel, NL-2971 BR Bleskensgraaf (NL); VIJVERBERG, Hélène, Geralda, Maria, NL-3141 GH Maassluis (NL)
(74) Representative: Corten, Maurice Jean F.M.
(86) International application number: PCT/NL2001/000011
(87) International publication number: WO 2001/056369

(56) References cited:
- NL-C- 1 004 980
- US-A- 4 190 020

## Description

The invention relates to an implement for detecting physical abnormalities in milk according to the preamble of claim 1. The invention further relates to a milking robot which is provided with the implement.

Such an implement is known from patent application WO-A-98/30084. The presence of particular substances in the milk can be detected by means of the known colour sensor measuring system. A disadvantage thereof is that a user often has to make himself a further analysis of the milk condition on the basis of the detected substances. Moreover, the results are not very reliable.

The invention aims at further developing and improving such an implement. According to the invention, this is achieved by the measures described in the characterizing part of claim 1.

The values derived from the measured light intensities may be said measured values themselves, but preferably values corrected by means of the computer are determined and used. For that purpose the computer is programmed to determine corrected values as said values derived from the measured light intensities, the correction compensating the influence of the temperature of the light source and/or of the milk on the measured intensities. The fact is that particularly the temperature of the light source, such as e.g. a LED, has proved to influence the measured values of the intensities. The measured values may be converted by the computer to measured values related to a temperature of e.g. 25°C.

The computer may further be programmed to determine corrected values as said values derived from the measured light intensities, the correction compensating the differences between the light sensors used. The fact is that different specimens of the light sensor may have mutually differing measuring characteristics. By means of the correction undesired temperature influences and/or differences between the sensors used are thus compensated. In this manner the reliability of the implement is enhanced.

As reference values may be used fixed values (e.g. of reference milk). However, preferably dynamic values are used, such as e.g. average values over the last milkings of a group of animals. Preferably the computer avails of information in relation to the identity of the animals from which the analysed milk has been yielded. The diagnosis possibilities stored comprise syndromes for the animal from which the relevant milk has been yielded, milk quality indications and the presence of particular substances in the milk.

The invention will be explained hereinafter in further detail with reference to some examples.

The implement is further provided with a display unit, the computer being suitable for displaying via said display unit measurement data and/or results of processed measurement data and/or selected diagnosis/diagnoses. In this manner the implement is user-friendly.

The implement may further be provided with means for measuring the conductivity of the milk and/or milk samples, the computer being suitable for comparing values derived from the measured values of the conductivity with further reference values. The derived values may again be the result of a correction or conversion carried out with the aid of the computer. The further reference values are again fixed or dynamic values. By combining the measurement data of the light intensity with the measurement data of the conductivity, there can be achieved a high degree of reliability upon selection of the diagnosis/diagnoses.

The implement is preferably designed as a quadruple implement for carrying out measurements per udder quarter with cows.

The computer is programmed to select the diagnosis "mastitis; pathogen: E-coli" for an udder quarter upon detection by the light sensors of a decreased intensity of diffused light of a blue as well as a green as well as a red colour for the relevant udder quarter relative to the reference values. When the measured intensity of the diffused light or the value derived therefrom by the computer for blue as well as green as well as red light is at least 10% lower than the reference value, then the computer selects the diagnosis that the udder quarter related to the relevant milk is affected by mastitis caused by E-coli bacteria.

It has been found that upon measurements on colostrum the intensity of diffused blue light is lower than normally. The computer is programmed to select the diagnosis "colostrum" upon detection by the light sensors of a decreased intensity of diffused light of a blue colour for all the udder quarters relative to the reference values.

When for an udder quarter the intensity of diffused blue light is lower than normally, then we are dealing with mastitis. The computer is programmed to select the diagnosis "mastitis" for an udder quarter upon detection by the light sensors of a decreased intensity of diffused light of a blue colour for the relevant udder quarter relative to the reference values.

At a decreased intensity of diffused blue light combined with a somewhat less decreased intensity of diffused green light it is very likely that we are dealing with mastitis. Therefore the computer is programmed to select the diagnosis "mastitis" for an udder quarter upon detection by the light sensors of a decreased intensity of diffused light of a blue colour for the relevant udder quarter relative to the reference values and a less decreased intensity of diffused light of a green colour for the relevant udder quarter relative to the reference values.

The computer is further programmed to select the diagnosis "mastitis" for an udder quarter upon detection by the light sensors of a decreased intensity of diffused light of a blue colour for the relevant udder quarter relative to the reference values in combination with detection of an increased conductivity for the relevant udder relative to the further reference values. Also this combination of measured values indicates mastitis.

The computer is programmed to select additionally the diagnosis "pathogen: SAU (staphylococcus aureus)" for an udder quarter upon detection by the light sensors of an also slightly decreased intensity of diffused light of a red colour for the relevant udder quarter relative to the reference values. The computer is programmed to select additionally the diagnosis "pathogen: E-coli" for an udder quarter upon detection by the light sensors of an also strongly decreased intensity of diffused light of a red colour for the relevant udder quarter relative to the reference values. In this manner the implement provides a more detailed diagnosis for the abnormalities in the milk.

The computer may further be programmed to select the diagnosis "blood" for an udder quarter upon detection by the light sensors of a decreased intensity of diffused light of both a green and a blue colour for the relevant udder quarter relative to the reference values.

The computer is programmed to select the diagnosis "blood" for an udder quarter upon detection by the light sensors of a decreased intensity of diffused light of both a green and a blue colour for the relevant udder quarter relative to the reference values in combination with detection of a hardly deviating conductivity for the relevant udder quarter relative to the further reference values. The combination of said measured values has proved to provide a reliable diagnosis.

The computer may also be programmed to select the diagnosis "mastitis; pathogen: E-coli" for an udder quarter upon detection by the light sensors of an increased intensity of transmitted light of a green as well as a blue as well as a red colour for the relevant udder quarter relative to the reference values. The increased transmission values also indicate an udder inflammation by E-coli bacteria.

The computer is preferably programmed to select and perform one or more actions to be carried out on the basis of the selected diagnosis/diagnoses from a plurality of action possibilities stored. The action possibilities stored comprise e.g. reporting somehow the number of the relevant animal. Upon detection of a particular syndrome, for example, the computer may put the number of the relevant animal on an attention list or on a separation list in the computer, so that the required further steps can be taken.

The computer may also be connectable to further equipment and then be programmed to select one or more actions to be carried out on the basis of the selected diagnosis/diagnoses from a plurality of action possibilities stored. In that case the computer is suitable for actuating said further equipment in such a manner that the further equipment performs the selected actions. The computer may be connected, for example, to an automatic feeding device. In case of a particular diagnosis the computer sends a control signal to the feeding device, on the basis of which the composition of the feed for the relevant animal is adapted. By means of a control signal the computer can also select and/or supply particular medicines with the aid of a metering device.

The implement described is extremely suitable for being used with a milking robot. Abnormalities in the milk can be detected quickly, efficiently and reliably by means of the implement. The actions required can, at least partially, be carried out automatically by means of the implement described.

## Claims

1. An implement for detecting physical abnormalities in milk, which implement is provided with at least one light source for irradiating milk and/or milk samples with light of a red and/or a green and/or a blue colour, and at least one light sensor for measuring the intensity of light reflected and/or diffused and/or transmitted by the milk, as well as a computer for processing measurement data, **characterized in that** the computer is programmed to select one or more diagnoses for the abnormalities in the milk from a plurality of diagnosis possibilities stored, on the basis of a comparison of values derived from the measured light intensities with reference values.

2. An implement as claimed in claim 1, **characterized in that** the implement is provided with at least one light sensor for measuring the intensity of background light.

3. An implement as claimed in claim 1 or 2, **characterized in that** the computer is programmed to determine corrected values as said values derived from the measured light intensities, the correction compensating the influence of the temperature of the light source and/or of the milk on the measured intensities.

4. An implement as claimed in any one of claims 1 to 3, **characterized in that** the computer is programmed to determine corrected values as said values derived from the measured light intensities, the correction compensating the differences between the light sensors used.

5. An implement as claimed in any one of claims 1 to 4, **characterized in that** the implement is further provided with a display unit, the computer being suitable for displaying via said display unit measurement data and/or results of processed measurement data and/or selected diagnosis/diagnoses.

6. An implement as claimed in any one of claims 1 to 5, **characterized in that** the implement is further provided with means for measuring the conductivity of the milk and/or milk samples, and **in that** the computer is suitable for comparing values derived from the measured values of the conductivity with further reference values.

7. An implement as claimed in any one of claims 1 to 6, **characterized in that** the implement is designed as a quadruple implement for carrying out measurements per udder quarter.

8. An implement as claimed in any one of claims 1 to 7, **characterized in that** the computer is programmed to select the diagnosis "colostrum" upon detection by the light sensors of a decreased intensity of diffused light of a blue colour for all the udder quarters relative to the reference values.

9. An implement as claimed in any one of claims 1 to 7, **characterized in that** the computer is programmed to select the diagnosis "mastitis" for an udder quarter upon detection by the light sensors of a decreased intensity of diffused light of a blue colour for the relevant udder quarter relative to the reference values.

10. An implement as claimed in any one of claims 1 to 7, **characterized in that** the computer is programmed to select the diagnosis "mastitis" for an udder quarter upon detection by the light sensors of a decreased intensity of diffused light of a blue colour for the relevant udder quarter relative to the reference values and a less decreased intensity of diffused light of a green colour for the relevant udder quarter relative to the reference values.

11. An implement as claimed in any one of claims 6 and 7, **characterized in that** the computer is programmed to select the diagnosis "mastitis" for an udder quarter upon detection by the light sensors of a decreased intensity of diffused light of a blue colour for the relevant udder quarter relative to the reference values in combination with detection of an increased conductivity for the relevant udder quarter relative to the further reference values.

12. An implement as claimed in any one of claims 9 to 11, **characterized in that** the computer is programmed to select additionally the diagnosis "pathogen: SAU (staphylococcus aureus)" for an udder quarter upon detection by the light sensors of an also slightly decreased intensity of diffused light of a red colour for the relevant udder quarter relative to the reference values.

13. An implement as claimed in any one of claims 9 to 11, **characterized in that** the computer is programmed to select additionally the diagnosis "pathogen: E-coli" for an udder quarter upon detection by the light sensors of an also strongly decreased intensity of diffused light of a red colour for the relevant udder quarter relative to the reference values.

14. An implement as claimed in any one of claims 1 to 7, **characterized in that** the computer is programmed to select the diagnosis "blood" for an udder quarter upon detection by the light sensors of a decreased intensity of diffused light of both a green and a blue colour for the relevant udder quarter relative to the reference values.

15. An implement as claimed in any one of claims 1 to 7, **characterized in that** the computer is programmed to select the diagnosis "blood" for an udder quarter upon detection by the light sensors of a decreased intensity of diffused light of both a green and a blue colour for the relevant udder quarter relative to the reference values, combined with detection of a hardly deviating conductivity for the relevant udder quarter relative to the further reference values.

16. An implement as claimed in any one of claims 1 to 7, **characterized in that** the computer is programmed to select the diagnosis "mastitis; pathogen: E-coli" for an udder quarter upon detection by the light sensors of an increased intensity of transmitted light of a green as well as a blue as well as a red colour for the relevant udder quarter relative to the reference values.

17. An implement as claimed in any one of claims 1 to 7, **characterized in that** the computer is programmed to select the diagnosis "mastitis; pathogen: E-coli" for an udder quarter upon detection by the light sensors of a decreased intensity of diffused light of a blue as well as a green as well as a red colour for the relevant udder quarter relative to the reference values.

18. An implement as claimed in any one of claims 1 to 17, **characterized in that** the computer is programmed to select and perform one or more actions to be carried out on the basis of the selected diagnosis/diagnoses from a plurality of action possibilities stored.

19. An implement as claimed in any one of claims 1 to 18, **characterized in that** the computer is programmed to select one or more actions to be carried out on the basis of the selected diagnosis/diagnoses from a plurality of action possibilities stored and is capable of being connected to further equipment and suitable for actuating said further equipment in such a manner that it performs the selected actions.

20. A milking robot provided with an implement as claimed in any one of claims 1 to 19.

## Patentansprüche

1. Vorrichtung zum Ermitteln von physischen Anomalien in Milch, wobei die Vorrichtung mit mindestens einer Lichtquelle versehen ist, um Milch und/oder Milchproben mit Licht von roter und/oder grüner und/oder blauer Farbe zu bestrahlen, und mit mindestens einem Lichtsensor zum Messen der Stärke von Licht, das von der Milch reflektiert und/oder zerstreut und/oder durchgelassen wird, sowie mit einem Computer zum Verarbeiten von Meßdaten,
**dadurch gekennzeichnet, daß** der Computer dazu programmiert ist, auf der Basis eines Vergleichs der von den gemessenen Lichtstärken abgeleiteten Werte mit Referenzwerten eine oder mehrere Diagnosen für die Anomalien in der Milch aus einer Vielzahl von gespeicherten Diagnosemöglichkeiten auszuwählen.

2. Vorrichtung nach Anspruch 1,
**dadurch gekennzeichnet, daß** die Vorrichtung mit mindestens einem Lichtsensor zum Messen der Stärke von Hintergrundlicht versehen ist.

3. Vorrichtung nach Anspruch 1 oder 2,
**dadurch gekennzeichnet, daß** der Computer dazu programmiert ist, als von den gemessenen Lichtstärken abgeleitete Werte korrigierte Werte zu ermitteln, wobei die Korrektur den Einfluß der Temperatur der Lichtquelle und/oder der Milch auf die gemessenen Lichtstärken kompensiert.

4. Vorrichtung nach einem der Ansprüche 1 bis 3,
**dadurch gekennzeichnet, daß** der Computer dazu programmiert ist, als von den gemessenen Lichtstärken abgeleitete Werte korrigierte Werte zu ermitteln, wobei die Korrektur die Unterschiede zwischen den verwendeten Lichtsensoren kompensiert.

5. Vorrichtung nach einem der Ansprüche 1 bis 4,
**dadurch gekennzeichnet, daß** die Vorrichtung ferner mit einer Anzeigeeinheit versehen ist, wobei der Computer geeignet ist, über die Anzeigeeinheit Meßdaten und/oder Ergebnisse von verarbeiteten Meßdaten und/oder eine ausgewählte Diagnose/Diagnosen anzuzeigen.

6. Vorrichtung nach einem der Ansprüche 1 bis 5,
**dadurch gekennzeichnet, daß** die Vorrichtung ferner mit einer Vorrichtung zum Messen der Leitfähigkeit der Milch und/oder der Milchproben versehen ist, und daß der Computer geeignet ist, von den gemessenen Werten der Leitfähigkeit abgeleitete Werte mit weiteren Referenzwerten zu vergleichen.

7. Vorrichtung nach einem der Ansprüche 1 bis 6,
**dadurch gekennzeichnet, daß** die Vorrichtung als Vierfachvorrichtung ausgeführt ist, um Messungen pro Euterviertel durchzuführen.

8. Vorrichtung nach einem der Ansprüche 1 bis 7,
**dadurch gekennzeichnet, daß** der Computer dazu programmiert ist, die Diagnose "Kolostrum" auszuwählen, wenn die Lichtsensoren bei allen Eutervierteln eine verringerte Stärke an zerstreutem Licht von blauer Farbe relativ zu den Referenzwerten ermitteln.

9. Vorrichtung nach einem der Ansprüche 1 bis 7,
**dadurch gekennzeichnet, daß** der Computer dazu programmiert ist, die Diagnose "Mastitis" für ein Euterviertel auszuwählen, wenn von den Lichtsensoren für das betreffende Euterviertel eine verringerte Stärke an zerstreutem Licht von blauer Farbe relativ zu den Referenzwerten ermittelt wird.

10. Vorrichtung nach einem der Ansprüche 1 bis 7,
**dadurch gekennzeichnet, daß** der Computer dazu programmiert ist, die Diagnose "Mastitis" für ein Euterviertel auszuwählen, wenn von den Lichtsensoren für das betreffende Euterviertel eine verringerte Stärke an zerstreutem Licht von blauer Farbe relativ zu den Referenzwerten und für das betreffende Euterviertel eine weniger verringerte Stärke an zerstreutem Licht von grüner Farbe relativ zu den Referenzwerten ermittelt wird.

11. Vorrichtung nach einem der Ansprüche 6 und 7,
**dadurch gekennzeichnet, daß** der Computer dazu programmiert ist, die Diagnose "Mastitis" für ein Euterviertel auszuwählen, wenn von den Lichtsensoren für das betreffende Euterviertel eine verringerte Stärke an zerstreutem Licht von blauer Farbe relativ zu den Referenzwerten und in Verbindung damit für das betreffende Euterviertel eine erhöhte Leitfähigkeit relativ zu den weiteren Referenzwerten ermittelt wird.

12. Vorrichtung nach einem der Ansprüche 9 bis 11,
**dadurch gekennzeichnet, daß** der Computer dazu programmiert ist, zusätzlich die Diagnose "Pathogen: SAU (Staphylococcus aureus)" für ein Euterviertel auszuwählen, wenn von den Lichtsensoren für das betreffende Euterviertel auch eine leicht verringerte Stärke an zerstreutem Licht von roter Farbe relativ zu den Referenzwerten ermittelt wird.

13. Vorrichtung nach einem der Ansprüche 9 bis 11,
**dadurch gekennzeichnet, daß** der Computer dazu programmiert ist, zusätzlich die Diagnose "Pathogen: E. coli" für ein Euterviertel auszuwählen, wenn von den Lichtsensoren für das betreffende Euterviertel auch eine stark verringerte Stärke an zerstreutem Licht von roter Farbe relativ zu den Referenzwerten ermittelt wird.

14. Vorrichtung nach einem der Ansprüche 1 bis 7,
**dadurch gekennzeichnet, daß** der Computer dazu programmiert ist, die Diagnose "Blut" für ein Euterviertel auszuwählen, wenn von den Lichtsensoren für das betreffende Euterviertel eine verringerte Stärke an zerstreutem Licht sowohl von grüner als auch von blauer Farbe relativ zu den Referenzwerten ausgewählt wird.

15. Vorrichtung nach einem der Ansprüche 1 bis 7,
**dadurch gekennzeichnet, daß** der Computer dazu programmiert ist, die Diagnose "Blut" für ein Euterviertel auszuwählen, wenn von den Lichtsensoren für das betreffende Euterviertel eine verringerte Stärke an zerstreutem Licht sowohl von grüner als auch von blauer Farbe relativ zu den Referenzwerten und in Verbindung damit für das betreffende Euterviertel eine kaum abweichende Leitfähigkeit relativ zu den weiteren Referenzwerten ermittelt wird.

16. Vorrichtung nach einem der Ansprüche 1 bis 7,
**dadurch gekennzeichnet, daß** der Computer dazu programmiert ist, die Diagnose "Mastitis; pathogen: E. coli" für ein Euterviertel auszuwählen, wenn von den Lichtsensoren für das betreffende Euterviertel eine erhöhte Stärke an durchgelassenem Licht von grüner wie von blauer wie von roter Farbe relativ zu den Referenzwerten ermittelt wird.

17. Vorrichtung nach einem der Ansprüche 1 bis 7,
**dadurch gekennzeichnet, daß** der Computer dazu programmiert ist, die Diagnose "Mastitis; pathogen: E. coli" für ein Euterviertel auszuwählen, wenn von den Lichtsensoren für das betreffende Euterviertel eine verringerte Stärke an zerstreutem Licht von blauer wie von grüner wie von roter Farbe relativ zu den Referenzwerten ermittelt wird.

18. Vorrichtung nach einem der Ansprüche 1 bis 17,
**dadurch gekennzeichnet, daß** der Computer dazu programmiert ist, aus einer Vielzahl von gespeicherten Maßnahmemöglichkeiten eine oder mehrere Maßnahmen auszuwählen und durchzuführen, die auf der Basis der ausgewählten Diagnose/Diagnosen durchzuführen sind.

19. Vorrichtung nach einem der Ansprüche 1 bis 18,
**dadurch gekennzeichnet, daß** der Computer dazu programmiert ist, aus einer Vielzahl von gespeicherten Maßnahmemöglichkeiten eine oder mehrere Maßnahmen auszuwählen, die auf der Basis der ausgewählten Diagnose/Diagnosen durchzuführen sind, und mit einer weiteren Vorrichtung zu verbinden und geeignet ist, die weitere Vorrichtung derart zu betätigen, daß sie die ausgewählten Maßnahmen durchführt.

20. Melkroboter mit einer Vorrichtung nach einem der Ansprüche 1 bis 19.

## Revendications

1. Outil de détection d'anomalies physiques dans le lait, lequel outil est muni d'au moins une source lumineuse pour irradier du lait et/ou des échantillons de lait avec de la lumière d'une couleur rouge et/ou verte et/ou bleue et au moins un capteur de lumière pour mesurer l'intensité de la lumière réfléchie et/ou diffusée et/ou transmise par le lait, ainsi que d'un ordinateur pour traiter des données de mesure, **caractérisé en ce que** l'ordinateur est programmé pour sélectionner une ou plusieurs possibilités de diagnostic mémorisées, sur la base d'une comparaison de valeurs dérivées des intensités lumineuses mesurées avec des valeurs de référence.

2. Outil selon la revendication 1, **caractérisé en ce que** l'outil est muni d'au moins un capteur de lumière pour mesurer l'intensité de lumière de fond.

3. Outil selon la revendication 1 ou 2, **caractérisé en ce que** l'ordinateur est programmé pour déterminer des valeurs corrigées comme lesdites valeurs dérivées des intensités lumineuses mesurées, la correction compensant l'influence de la température de la source lumineuse et/ou du lait sur les intensités mesurées.

4. Outil selon l'une quelconque des revendications 1 à 3, **caractérisé en ce que** l'ordinateur est programmé pour déterminer des valeurs corrigées comme lesdites valeurs dérivées des intensités lumineuses mesurées, la correction compensant les différences entre les capteurs de lumière utilisés.

5. Outil selon l'une quelconque des revendications 1 à 4, **caractérisé en ce que** l'outil est muni en outre d'une unité d'affichage, l'ordinateur étant adapté pour afficher via ladite unité d'affichage des données de mesure et/ou des résultats de données de mesure traitées et/ou de diagnostic/diagnostics.

6. Outil selon l'une quelconque des revendications 1 à 5, **caractérisé en ce que** l'outil est muni en outre de moyens pour mesurer la conductivité du lait et/ou d'échantillons de lait et **en ce que** l'ordinateur est adapté pour comparer des valeurs dérivées des valeurs mesurées de la conductivité avec des valeurs de référence.

7. Outil selon l'une quelconque des revendications 1 à 6, **caractérisé en ce que** l'outil est conçu comme un quadruple outil pour exécuter des mesures par quartier de mamelle.

8. Outil selon l'une quelconque des revendications 1 à 7, **caractérisé en ce que** l'ordinateur est programmé pour sélectionner le diagnostic « colostrum » lors de la détection par les capteurs de lumière d'une intensité diminuée de lumière diffusée d'une couleur bleue pour tous les quartiers de mamelles par rapport aux valeurs de référence.

9. Outil selon l'une quelconque des revendications 1 à 7, **caractérisé en ce que** l'ordinateur est programmé pour sélectionner le diagnostic « mastite » pour un quartier de mamelle lors de la détection par les capteurs de lumière d'une intensité diminuée de lumière diffusée d'une couleur bleue pour le quartier de mamelle correspondant par rapport aux valeurs de référence.

10. Outil selon l'une quelconque des revendications 1 à 7, **caractérisé en ce que** l'ordinateur est programmé pour sélectionner le diagnostic « mastite » pour un quartier de mamelle lors de la détection par les capteurs de lumière d'une intensité diminuée de lumière diffusée d'une couleur bleue pour le quartier de mamelle correspondant par rapport aux valeurs de référence et une intensité moins diminuée de lumière diffusée d'une couleur bleue pour le quartier de mamelle correspondant par rapport aux valeurs de référence.

11. Outil selon l'une quelconque des revendications 6 et 7, **caractérisé en ce que** l'ordinateur est programmé pour sélectionner le diagnostic « mastite » pour un quartier de mamelle lors de la détection par les capteurs de lumière d'une intensité diminuée de lumière diffusée d'une couleur bleue pour le quartier de mamelle correspondant par rapport aux valeurs de référence en combinaison avec une détection d'une conductivité augmentée pour le pis correspondant par rapport aux valeurs de référence ultérieures.

12. Outil selon l'une quelconque des revendications 9 à 11, **caractérisé en ce que** l'ordinateur est programmé pour sélectionner en plus le diagnostic « pathogène : SAU (staphylocoque doré) » pour un quartier de mamelle lors de la détection par les capteurs de lumière d'une intensité même légèrement diminuée de lumière diffusée d'une couleur rouge pour le quartier de mamelle correspondant par rapport aux valeurs de référence.

13. Outil selon l'une quelconque des revendications 9 à 11, **caractérisé en ce que** l'ordinateur est programmé pour sélectionner en plus le diagnostic « pathogène: E. coli » pour un quartier de mamelle lors de la détection par les capteurs de lumière d'une intensité même fortement diminuée de lumière diffusée d'une couleur rouge pour le quartier de mamelle correspondant par rapport aux valeurs de référence.

14. Outil selon l'une quelconque des revendications 1 à 7, **caractérisé en ce que** l'ordinateur est programmé pour sélectionner le diagnostic « sang » pour un quartier de mamelle lors de la détection par les capteurs de lumière d'une intensité diminuée de lumière diffusée d'une couleur verte et d'une couleur bleue pour le quartier de mamelle correspondant par rapport aux valeurs de référence.

15. Outil selon l'une quelconque des revendications 1 à 7, **caractérisé en ce que** l'ordinateur est programmé pour sélectionner le diagnostic « sang » pour un quartier de mamelle lors de la détection par les capteurs de lumière d'une intensité diminuée de lumière diffusée d'une couleur verte et d'une couleur bleue pour le quartier de mamelle correspondant par rapport aux valeurs de référence, combinée avec une conductivité s'écartant fortement par rapport aux valeurs de référence ultérieures.

16. Outil selon l'une quelconque des revendications 1 à 7, **caractérisé en ce que** l'ordinateur est programmé pour sélectionner le diagnostic « pathogène : E. coli » pour un quartier de mamelle la détection par les capteurs de lumière d'une intensité augmentée de lumière transmise d'une couleur verte ainsi que bleue ainsi que rouge pour le quartier de mamelle correspondant par rapport aux valeurs de référence.

17. Outil selon l'une quelconque des revendications 1 à 7, **caractérisé en ce que** l'ordinateur est programmé pour sélectionner le diagnostic « mastite ; pathogène : E. coli » pour un quartier de mamelle lors de la détection par les capteurs de lumière d'une intensité diminuée de lumière diffusée d'une couleur bleue ainsi que verte ainsi que rouge pour le quartier de mamelle correspondant par rapport aux valeurs de référence.

18. Outil selon l'une quelconque des revendications 1 à 17, **caractérisé en ce que** l'ordinateur est programmé pour sélectionner et effectuer une ou plusieurs actions à exécuter sur la base du ou des diagnostics sélectionnés à partir d'une pluralité de possibilités d'actions mémorisées.

19. Outil selon l'une quelconque des revendications 1 à 18, **caractérisé en ce que** l'ordinateur est programmé pour sélectionner et effectuer une ou plusieurs actions à exécuter sur la base du ou des diagnostics sélectionnés à partir d'une pluralité de possibilités d'actions mémorisées et est en mesure d'être connecté à un équipement ultérieur et adapté pour actionner ledit équipement ultérieur d'une manière telle qu'il effectue les actions sélectionnées.

20. Robot trayeur muni d'un outil selon l'une quelconque des revendications 1 à 19.
